# EUROPEAN PATENT APPLICATION

(11) **EP 4 183 761 A1**
(43) Date of publication of application: **24.05.2023**
(21) Application number: 21208989.0
(22) Date of filing: 18.11.2021
(51) Int. Cl.: C04B 35/634, C04B 35/626

(54) **USE OF COMPACTED POLYVINYL ACETALS AS BINDER IN CERAMIC GREEN SHEETS**

(71) Applicant: Kuraray Europe GmbH, 65795 Hattersheim (DE)
(72) Inventor: Frank, Michael, 55268 Nieder-Olm (DE); Mummy, Florian, 60325 Frankfurt am Main (DE)
(74) Representative: Janßen, Christian Oliver

(57) **Abstract**

The invention is directed to the use of compacted powders of polyvinyl acetals as binder in ceramic green sheets, wherein the polyvinyl acetal has a molecular weight of equal to or more than 50,000 g/mol and equal to or less than 150,000 g/mol, when measured by gel permeation chromatography according to DIN ISO 16014-1:2019-05. wherein the compactate has a median particle size of 1 to 5 mm. A suspension composition comprising one or more inorganic pigments, one or more organic solvents, one or more binders, one or more plasticizers, and one or more dispersing agents, wherein the binder is the aforementioned compactate is also disclosed.

## Description

The invention is directed to the use of compacted powders of polyvinyl acetals as binder in ceramic green sheets.

Ceramic materials like ceramic capacitators for the electronics industry are generally produced by sintering of a so-called green sheet, i.e. a film-like, thin moulded body, which contains the ceramic materials. For the production of these green sheets, a suspension of metal oxides, plasticizers, dispersing agents and binders in organic solvents is produced. This suspension is subsequently applied by means of a suitable process (i.e. doctor blade process) in the desired thickness onto a carrier film and the solvent is removed. The green sheet thus obtained must be free from cracks, exhibit a smooth surface and still have a certain elasticity.

Polyvinyl acetals such as polyvinyl butyral (PVB) are frequently used as binders for the production of ceramic green sheets. To this end, DE 4 003 198 A1 describes the production of a casting slip for ceramic green films in which PVB with a residual polyvinyl acetate content of 0 to 2% by weight is used as binder.

In recent years, multi-layer ceramic capacitors (MLCC) are becoming increasingly important for the electronic industry. MLCCs consist of a number of individual capacitors stacked together in parallel and contacted via the terminal surfaces. Due to the advancing miniaturization of the electronic components, the size of the powder particles can be as small as 10 nm. Hence, the production demands an increased accuracy of the ceramic sheets used therein. Additionally, the multi-layer stacks of ceramic green sheets are often wound up to a roll in the production process. To avoid delamination, the individual green sheets must possess superior properties with respect to binding and elongation-at-break.

In order to achieve these goals, PVB with a high molecular weight, i.e. with a high degree of polymerization, is preferred since such PVB is leading to a suspension with a high enough viscosity. However, high-molecular weight PVB has an inferior dissolution rate as compared to shorter chain PVB leading to an overall increase in the time required to prepare the suspensions.

The PVB resin used for preparing the suspensions is generally supplied in form of fine powders. However, such powders cannot be used in all industrial settings due health and/or safety concerns. Depending on the particle size of the powder, particles can easily be inhaled into the lungs of the employees that handling the material. Furthermore, material in powder form typically shows an explosion risk after flame ignition.

To solve these problems, PVB in granule form has been introduced. For example, US20080203593A1 describes the production of PVB granules to be used as binder for ceramic green sheets.

However, the production of such granules using melt extrusion can lead to partial decomposition of the PVB due to the elevated temperatures and high shear forces used in the extruder. Furthermore, granules dissolve much slower than the corresponding powders. Since high-molecular weight PVB is already inferior with regard to the rate of dissolution, using such PVB in form of granules is discouraged in the ceramic industry.

Thus, one objective of the invention was to provide binders for ceramic green sheets with an improved rate of dissolution. A further objective was to provide binders leading to improved adhesion, improved handling, improved elongation-at-break, improved dispersion effect, an improved environmental, health and safety impact and/or with a better economical profile in the production and use of the ceramic green sheet.

The current inventors have now surprisingly found that using compacted PVB solves these and other objectives.

Accordingly, a first aspect of the present invention concerns the use of a compactate comprising polyvinyl acetal as a binder for the production of a ceramic green sheet or a ceramic moulded body wherein the polyvinyl acetal has a molecular weight of equal to or more than 50,000 g/mol when measured by gel permeation chromatography according to DIN ISO 16014 1:2019-05.

The molecular weight is determined by gel permeation chromatography according to DIN ISO 16014 1:2019-05. Preferably, the molecular weight is equal to or more than 60,000 g/mol, more preferably 70,000 g/mol. Also preferably, the molecular weight is equal to or less than 200,000 g/mol, more preferably equal to or less than 175,000 g/mol, most preferably equal to or less than 150,000 g/mol and specifically equal to or less than 100,000 g/mol. Also preferably, the molecular weight is from 50,000 to 150,000 g/mol, more preferably from 60,000 to 125,000 g/mol.

The term "compactate" as used herein shall denote a compacted polyvinyl acetal powder which underwent a compacting process of pressing a dry powder without the use of a solvent or melting the powder. Such compacting processes are also referred to as dry granulation as opposed to wet granulation using a solution or slurry as well as an extrusion process using a melt of the polyvinyl acetal material.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. More preferably, they derive from the condensation reaction with iso-butyraldehyde, acetaldehyde and/or n-butyraldehyde. Most preferably, the polyvinyl acetal is polyvinyl butyral.

Although there is no particular limitation to the method for producing the polyvinyl acetals used in this embodiment of the present invention, they can be produced by a method in which an aldehyde is added to a polyvinyl alcohol solution under acidic conditions and thus, subjected to an acetalization reaction. Polyvinyl acetals are also commercially available, e.g. the Mowital^{®} polyvinyl acetals available from Kuraray Europe GmbH.

Preferably, the degree of acetalization of the polyvinyl acetals used in the present invention is 50 mol% or more and less than 90 mol%, more preferably the lower limit of the degree of acetalization is more than 60 mol%, more than 70 mol%. Further, the upper limit of the degree of acetalization is more preferably 90 mol% or less, 85 mol% or less, 80 mol% or less, and 75.

Preferably, the percentage of vinyl alcohol units in the polyvinyl acetals of the present invention is 10 to 50 mol%, more preferably 15 to 35 mol% based on the total monomer unit constituting the resin.

The vinyl alcohol content and vinyl acetate content of polyvinyl acetal were determined in accordance with DIN ISO 3681 (Acetate content) and DIN ISO 53240 (PVA content).

Preferably, the compactate has a median particle size of 0.5 to 5 mm, more preferably from 2 to 4 mm. The size of the particles is measured using a defined amount of particles and measuring the diameter in case of a spherical shape or the longest lateral axis in case of a non-spherical shape of the particle by optical inspection.

In a second aspect, the present invention concerns a suspension composition comprising one or more inorganic pigments, one or more organic solvents, one or more binders, one or more plasticizers, and one or more dispersing agents, wherein the binder is the compactate comprising the polyvinyl acetal as described above.

Preferably, the acetal group has 2 to 7 carbon atoms and is derived from the same aldehyde(s) as described above. Most preferably, the acetal group is derived from n-butyraldehyde.

The inorganic pigments can be chosen from finely ground granules of paraelectric or ferroelectric raw materials and include titanium dioxide (rutile), preferably modified by additives of zinc, zirconium, niobium, magnesium, tantalum, cobalt and/or strontium, as well as compounds chosen from MgNb₂O₆, ZnNb₂O₆, MgTa₂O₆, ZnTa₂O₆, (ZnMg)TiO₃, (ZrSn)TiO₄, BaTiO₃, and Ba₂Ti₉O₂₀. The average particle diameter of the inorganic pigments is preferably about 0.01 to 1 µm.

The organic solvent may be chosen from aromatic compounds, such as toluene and xylene, and alcohol compounds, such as ethyl alcohol, isopropyl alcohol and butyl alcohol and more preferably, mixtures thereof. Most preferably, the organic solvent is a mixture of ethanol and toluene.

Suitable dispersing agents include fish oil, phosphoric acid esters and functional polymers comprising polyoxyalkylene groups on side chain, such as the MALIALIM^{™} series commercially available from NOF America Cooperation.

In addition to the binder according to the present invention, the suspension may comprise other components chosen inter alia from other binders like cellulose resins, acrylic resins, vinyl acetate resins, polyvinyl alcohol resins; plasticizers such as polyethylene glycol or phthalic esters, and/or a defoamer.

The method to produce the suspension composition is not specifically limited. Various dispersing methods may be used, for example, a method of using a media-type mill, such as a bead mill, a ball mill, an attritor, a paint shaker and a sand mill; a method of kneading a powdered ceramic, a dispersing medium, a dispersing agent, a binder, a plasticizer and the like; and a method of using a three-roll mill. Using a three-roll mill, the method includes dispersing a powdered inorganic pigment in an organic solvent (mixture) together with a dispersing agent, a binder, a plasticizer, and the like. The mixture is passed through a small gap between a first roller and a second roller, which roll independently from each other and are adjacent to each other with the small gap therebetween, so as to be compressed and kneaded, and subsequently, the mixture is passed between the second roller and a third roller, which rolls and is adjacent to the second roller with a smaller gap therebetween than the gap between the first and the second rollers, so as to be further compressed and kneaded.

Preferably, the powdered ceramic, dispersing agent, and solvent (mixture) are premixed and dispersed so that the dispersing agent is adsorbed on the powdered ceramic. In a second step, the binder is added to the mixture thus formed, and subsequently, mixing and dispersing is performed again.

The dry film thickness of the coating film produced by these processes can be 0.25 to 25 micrometers, and typically, 1 to 15 micrometers.

The compactate may be prepared by a dry granulation process known in the prior art, i.e. a process whereby granules are formed without the aid of any liquid solution. Such processes are superior if the ingredients to be compacted are sensitive to moisture or heat. Compaction is used to densify the powder and form compactates. The process is generally carried out using a slugging tool or a roller compactor machine. The slugging method usually results in "slugs" - typically 25 mm in diameter and 10-15 mm thick. A hammer mill is ideal for breaking up the slugs to create the final compactates.

Preferably, the process to produce the compactates uses roller compactors. In this device the powder is squeezed through two counter-rotating rollers to form a compressed sheet. The sheets are brittle and break easily into flakes. The flakes need careful treatment to break them to compactates, after which they can be milled to the desired size. Roller-compaction equipment offers a wide range of pressures and roll types to attain proper densification.

### Examples

### Example 1 - PVB compactate 1

Polyvinyl butyral powder (Mowital^{®} B 75 H with a molecular weight of 100,000 g/mol+/- 10,000 g/mol) is drawn between two counter-rotating, water-cooled rollers using a roller compactor with a line pressure of 15 kN/cm at a temperature of 45 C. The resulting 0.5 - 1.0 cm thick sheets are then crushed and subsequently further reduced in size with the aid of a granulator to obtain a compactate with a median particle size of 1 - 3 mm.

### Dissolution behaviour of PVB powder vs. PVB compactate

10 g of PVB powder or compactate, respectively, was mixed with 90 g of a solvent mixture (1:1 mixture of ethanol and toluene). For the dissolution process, a rotating and tilting mixer was used (supplier: IKA, model: Kipp-/Rollenmischer, digital, 6).

After defined periods of time (0h, 3h, 6h, 18 h and 24h) the mixer was stopped and 1 g of the supernatant was taken and the solid content was determined with the help of an oven to evaporate the solvent. For the analysis a digital precision balance was used.

**Dissolution rate in [%]**

| **Substrate** | **Start (0h)** | **Time: 3h** | **Time: 6h** | **Time: 18 h** |
|---|---|---|---|---|
| **Mowital^{®} B 75 H Powder** | 0 % | 90% | 98% | 100% |
| **Compactate 1 of Mowital^{®} B 75 H** | 0 % | 100% | 100% | 100% |

### Results

Compactate 1 is completely dissolved after 3 hours already. On the other hand, the corresponding powder material needed a dissolution time of more than 6 hours to be completely dissolved.

### Particle counts in solution of PVB powder and PVB compactate

Compactate 2 was prepared as described above for compactate 1 except that Mowital^{®} B 30 HH, a PVB with a molecular weight of 35,000 g/mol +/- 10,000 g/mol commercially available from Kuraray Europe GmbH, was used.

2 g of PVB powder or compactate, respectively, was dissolved in 98 g of a solvent mixture (1:1 mixture of ethanol and toluene) using a tilting/rotating mixer. After 24 hours, a 50 mL sample was taken and analyzed by single particle measurement with laser focus using the Accusizer^{™} 780 by Soliton GmbH. Only particles with sizes in the range of 2-500 µm were counted.

| **Substrate** | **Counts per mL (particle size 2-500µm)** | **Increase of particle counts in % from powder to compactate** |
|---|---|---|
| **Mowital^{®} B 75 H** | 218 | |
| **Compactate 1** | 467 | +114% |
| **Mowital^{®} B 30 HH** | 155 | |
| **Compactate 2** | 710 | + 358 % |

### Results:

Residual particles with a size of 2 to 500 µm can be a major problem in the production of ceramic green sheets and the amount present in the binder solution must therefore be minimized. While the compacting process with regard to compactate 1 shows only moderate increase in particle size, compacting the PVB material with a lower molecular weight (compactate 2) surprisingly leads to a much higher increase of particle count from powder to compactate.

## Claims

1. Use of a compactate comprising polyvinyl acetal as a binder for the production of a ceramic green sheet or a ceramic moulded body wherein the polyvinyl acetal has a molecular weight of equal to or more than 50,000 g/mol when measured by gel permeation chromatography according to DIN ISO 16014-1:2019-05.

2. The use according to claim 1 wherein the polyvinyl acetal is polyvinyl butyral.

3. The use according to claim 1 or 2 wherein the polyvinyl acetal has a molecular weight of equal to or more than 50,000 g/mol and equal to or less than 150,000 g/mol when measured by gel permeation chromatography according to DIN ISO 16014-1:2019-05.

4. The use according to any one of claims 1 to 3 wherein the compactate has a median particle size of 1 to 5 mm.

5. A suspension composition comprising one or more inorganic pigments, one or more organic solvents, one or more binders, one or more plasticizers, and one or more dispersing agents, wherein the binder is the compactate according to any one of claims 1 to 4.

6. A compactate comprising polyvinyl acetal with a molecular weight of equal to or more than 50,000 g/mol when measured by gel permeation chromatography according to DIN ISO 16014-1:2019-05.

7. The compactate according to claim 6 with a median particle size of 1 to 5 mm.

8. A process for the preparation of the compactate according to claim 7 comprising a step of compacting a polyvinyl acetal powder using a roller mill.
